(19) Europäisches Patentamt
European Patent Office
Office européen des brevets

(11) **EP 2 233 897 A1**

(12) **EUROPEAN PATENT APPLICATION**
published in accordance with Art. 153(4) EPC

(43) Date of publication:
**29.09.2010 Bulletin 2010/39**

(51) Int Cl.:
***G01H 3/00*** *(2006.01)*

(21) Application number: **08703482.3**

(22) Date of filing: **18.01.2008**

(86) International application number:
**PCT/JP2008/050632**

(87) International publication number:
**WO 2009/090754 (23.07.2009 Gazette 2009/30)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nittobo Acoustic Engineering Co., Ltd.**
**Tokyo 130-0021 (JP)**

(72) Inventors:
• **OHASHI, Shinji**
**Tokyo 130-0021 (JP)**

• **TADAHIRA, Yoshio**
**Tokyo 130-0021 (JP)**
• **YAMASHITA, Koichi**
**Tokyo 130-0021 (JP)**

(74) Representative: **Möbus, Steffen**
**Kayser & Möbus**
**Patentanwälte**
**Leienfelsstrasse 6**
**81243 München (DE)**

(54) **SOUND SOURCE IDENTIFYING AND MEASURING APPARATUS, SYSTEM AND METHOD**

(57)     A sound source can be identified and measured for a long time period outdoors and indoors. A sound source identifying and measuring apparatus including a baffle provided with a frame and a weather-resistant screen for providing an aerial clearance is used for long-term indoor and outdoor measurement at a sound source measurement location to acquire sound source information in all the directions and associate the azimuth, elevation, sound pressure information and/or frequency characteristics or the like per elapsed time. A directional digital filter as well as identification parameters of a target sound source and untargeted sound source are used to identify the sound source more accurately for identification and measurement of the target sound source. Contribution of all of a plurality of sound sources to a sound pressure level is separated in terms of the coming direction for analysis. Thus, whether or not the sound source is a target sound is determined, and determination such as estimation of its sound source intensity and sound pressure level is made.

FIG.1

**Description**

TECHNICAL FIELD

The present invention relates to a sound source identifying and measuring apparatus, system and method for identifying a target sound source in all the directions and measuring the sound pressure and sound pressure level of the sound source.

BACKGROUND OF THE INVENTION

In the conventional technology, as an apparatus for identifying a target sound source, for example, in the case where the target sound source is aircraft noise, there are known a measurement apparatus (Patent Documents 1 and 2) of a radio wave reception type that receives a transponder response signal or a radio altimeter signal and determines and identifies whether target noise is aircraft noise or not, based on correlation between a noise level and field intensity of the signal wave; and there are known a measuring apparatus (Patent Document 3) by using a noise correlation system that detects and identifies coming direction of noise based on correlation among signals received by two or four microphones. The identification of a target sound source by using the above sound identifying apparatuses can be done without difficulty because it is only necessary for the apparatuses to determine whether large noise observed at a location where the target sound source is sufficiently dominant relative to the sound sources other than the target is the target sound or not.

However, at a location where the difference (S/N ratio) between the target sound source and sound sources other than the target is small, it is necessary to conduct manual measurement on site and make determination of the target sound source or not by comparing the actual sound level indicated by a noise meter and situations of the site confirmed by eyes and ears of a measurer. Also, in place of the on-site manual measurement (Non-patent Document 1), a real sound listening method (Non-patent Document 2) may be adopted. In this method, all the raw sounds of generated noise are recorded in a data logger and then transferred via a telephone line to a central counting device, and an analyzing personnel playbacks and listens all the data, and he or she makes determination of the target sound source or not. However, this method requires tremendous amount of work, resulting in a heavy load on the analyzing personnel.

Patent Document 1: Japanese Patent No. 1750374
Patent Document 2: Japanese Patent No. 3699705
Patent Document 3: Jpn. Pat. Appln. Publication No. 61-13169
Non-patent Document 1: "Koukuki souon kanshi sokutei manyuaru, "Manual for Aircraft Noise Monitoring and Measurement (July Showa 63, Japan's Environmental Protection Agency)
Non-Patent Document 2: "Koukuuki souon no jidousokutei genba ni okeru kufuu, "Ingenuity on Site of Automatic Measurement of Aircraft Noise (October 2005, Noise Control, No.5 of Vol. 29)

DISCLOSURE OF THE INVENTION

Problems to be Solved by the Invention

However, the apparatuses disclosed in the above prior documents cannot grasp the accurate position and direction of a target sound source at a location where the difference (S/N ratio) between the target sound source and sound sources other than the target is small, which accordingly makes it difficult to make the sound source identification. For example, assumed is a case where the target sound source is aircraft noise. In this case, when an apparatus is installed on the ground for measurement, the apparatus cannot accurately grasp the correct value of the target sound source due to influence of sound sources other than the target, such as vehicle noise and wind noise, having a sound pressure level equivalent to or more than that of the target sound source, resulting in a frequent occurrence of missing in measurement results. In such circumstances, development of an apparatus capable of identifying and measuring a sound source with high accuracy at such a location where the S/N ratio is small has been demanded.

The present invention has been made in view of the above problem, and an object of the present invention is to provide a sound source identifying and measuring apparatus, system, and method capable of solving the above problem.

Means for Solving the Problems

To solve the above problem, the present invention has the following configurations.

A sound source identifying and measuring apparatus as claimed in claim 1 of the present invention is a sound source identifying and measuring apparatus for identifying a target sound source among untargeted sound sources, comprised by including: a baffle formed into a sphere, a hemisphere, or a polyhedron; a plurality of microphones each having a sound collection section on the surface of the baffle; and a weather-resistant screen formed so as to cover the outer surface of the baffle.

A sound source identifying and measuring apparatus as claimed in claim 2 of the present invention is characterized by including a frame constituted by an inner frame and an outer frame which is brought into contact with the outer surface of the baffle on the inner frame side; and a weather-resistant screen which is brought into contact with the outer frame and covers the outer surface of the baffle through an aerial clearance.

A sound source identifying and measuring apparatus as claimed in claim 3 of the present invention is characterized by including a bandpass filter and/or a filter specialized for a target sound source in a receiving system of the microphones.

A sound source identifying and measuring apparatus as claimed in claim 4 of the present invention is **characterized in that** the microphones each have waterproof or drip proof property, and/or, a seal member is provided between the baffle and microphones.

A sound source identifying and measuring apparatus as claimed in claim 5 of the present invention is characterized by including a level adjuster for setting the vertical direction height of the baffle relative to the installation position.

A sound source identifying and measuring apparatus as claimed in claim 6 of the present invention is characterized by including a direction adjuster for setting an azimuth reference line and an elevation reference plane of the baffle.

A sound source identifying and measuring system as claimed in claim 7 of the present invention is characterized by including: the sound source identifying and measuring apparatus as claimed in any of claims 1 to 6; an A/D converter that converts an analog signal which is a sound pressure signal around the baffle obtained through the microphones into a digital signal; and a sound source identifying and analyzing apparatus that performs identification of the sound source direction, estimation of a sound pressure level for each sound source, and analysis of the moving path and moving speed of the sound source.

A sound source identifying and measuring system as claimed in claim 8 of the present invention is **characterized in that** the sound source identifying and analyzing apparatus has a calculation processing section, and the calculation processing performs numerical calculation to apply directional digital filtering to a digital signal.

A sound source identifying andmeasuring system as claimed in claim 9 of the present invention is **characterized in that** the sound source identifying and analyzing apparatus has an input section, and the input section receives as an input target sound source identification parameter and/or untargeted sound source identification parameter to select the target sound source and/or exclude the untargeted sound source.

A sound source identifying andmeasuring system as claimed in claim 10 of the present invention is **characterized in that** image information corresponding to the coming direction of specified sound is captured, and image processing is performed in the sound source identifying and analyzing apparatus based on the captured image information so as to identify an object as a target sound source.

A sound source identifying andmeasuring system as claimed in claim 11 of the present invention is characterized by further including an omnidirectional noise measuring apparatus.

A sound source identifying and measuring system as claimed in claim 12 of the present invention is characterized by further including a radio altimeter signal wave receiver and/or a transponder response signal wave receiver.

A sound source identifying and measuring method as claimed in claim 12 of the present invention is a sound identifying and measuring method for identifying a target sound source from one or a plurality of untargeted sound sources, characterized by including: a determination step of determining a time range corresponding to an analysis section in which the analysis of all coming directions of sound and intensity thereof are performed; an analysis step of analyzing the time-frequency acquired from the microphones; a search step of performing sound source search in the analysis section by performing the analysis of the all coming directions of sound and the intensity thereof; a grouping step of classifying sound sources into sound source groups in terms of a frequency based on the sound source search result obtained for each sound source; a determination step of determining a target sound source group among the sound source groups using a target sound source identification parameter and/or untargeted sound source identification parameter; and an estimation step of estimating the time variation of sound for each sound source group.

Advantages of the Invention

According to the sound source identifying and measuring apparatus, system and method of the present invention, it is possible to acquire an accurate sound pressure and sound pressure level of a target sound in the source identification and measurement even in a location where the S/N ratio is small for a long period of time anywhere irrespective of indoors or outdoors. Further, a target sound source is selected and/or an untargeted sound source is excluded by using a directional digital filter as well as identification parameters of the target sound source and/or untargeted sound source, thereby enabling accurate identification and measurement of the target sound source.

BEST MODE CARRYING OUT THE INVENTION

Brief Description of the Drawings

FIG. 1 is a perspective view showing a configuration example of a sound source identifying and measuring apparatus according to an embodiment of the present invention.
FIG. 2 is an exploded view showing a configuration example of a frame of the sound source identifying and measuring apparatus of FIG. 1.
FIG. 3 is an exploded view showing a configuration example of a weather-resistant screen of the sound source identifying and measuring apparatus.
FIG. 4 is a perspective view showing a configuration example of a sound source identifying and measuring system using the sound source identifying and measuring apparatus of FIG. 1.
FIG. 5 is a process view showing the outline of a sound source identifying and measuring method by using the sound source identifying and measuring system of FIG. 4.
FIG. 6 is a conceptual view for explaining noise measurement.
FIG. 7 is a visualized view for explaining a measurement result of aircraft sound obtained by using the sound source identifying and measuring system of FIG. 4.
FIG. 8 is a visualized view for explaining a identification/measurement result of aircraft sound and automobile sound obtained by using the sound source identifying and measuring system of FIG. 4.
FIGS. 9 (a) to 9 (d) are views for explaining an identification/measurement result of aircraft sound and automobile sound obtained by using the sound source identifying and measuring system of FIG. 4.

Best Mode for Carrying Out the Invention

A preferred embodiment of the present invention will be described below with reference to the accompanying drawings. In the following description, "target sound source" indicates a sound source subject to noise measurement, and "untargeted sound source" indicates a sound source other than the target sound source.

<Sound Identifying and Measuring Apparatus>

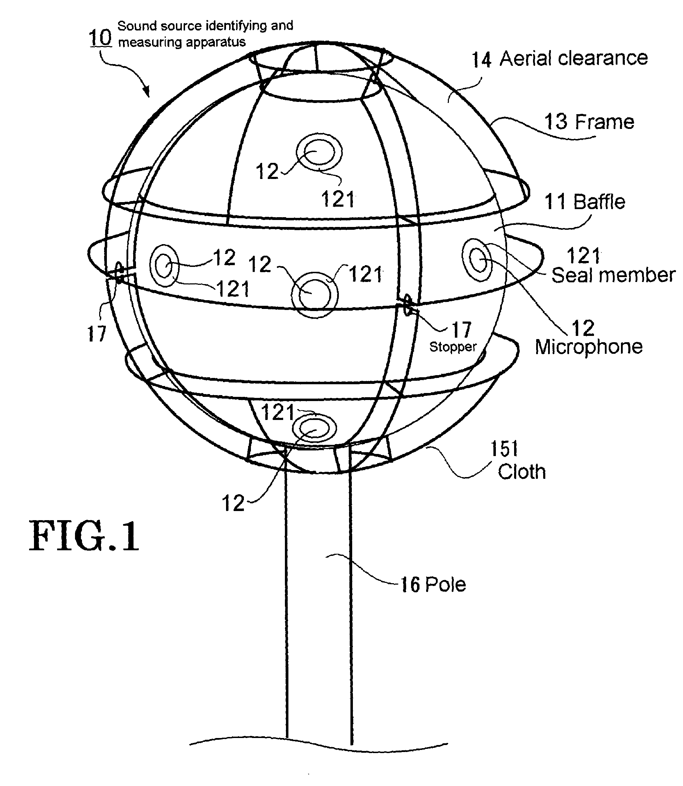

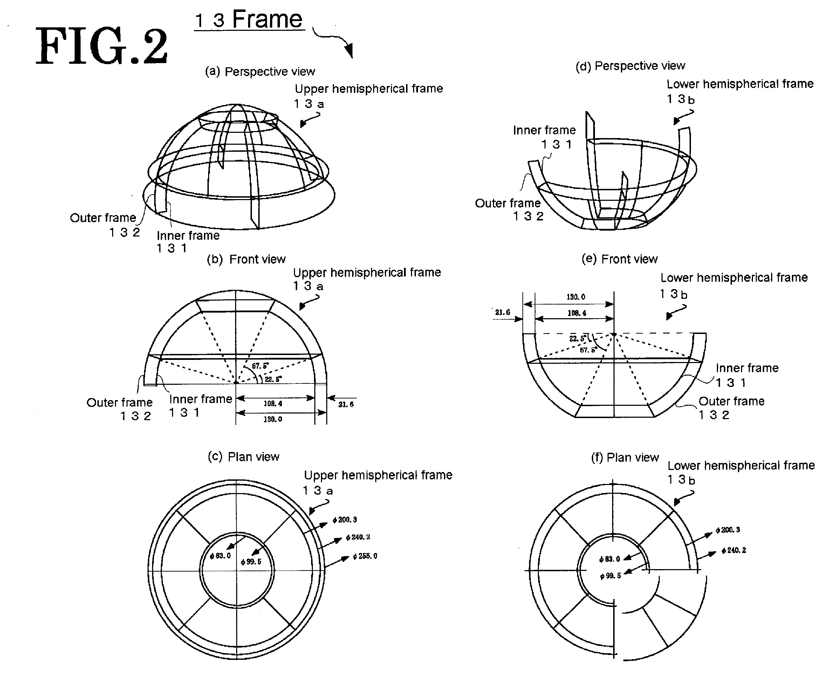

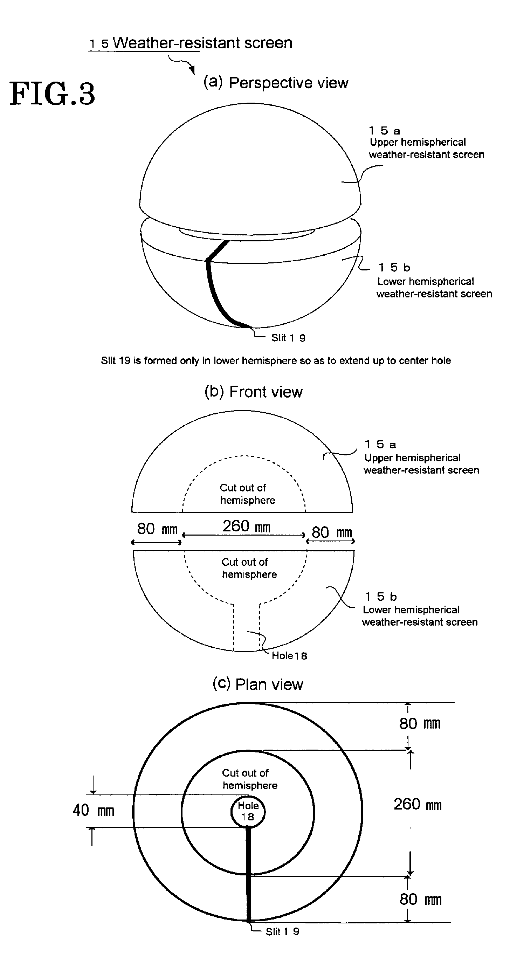

A sound source identifying and measuring apparatus 10 shown in a perspective view of FIG. 1 is an apparatus for identifying a target sound source from a single or plurality of sound sources existing in all the directions. The sound source identifying and measuring apparatus 10 includes a baffle 11 having a diameter of 216.8 mm, a plurality of waterproof microphones 12 having a preamplifier or the like and being provided on the surface of the baffle 11, a two-tiered frame 13 having an inner frame member 131 and an outer frame member 132 contacted on the outer surface of the baffle 11 at the side of inner frame member 131, and a weather-resistant screen 15 (see FIG. 3; not shown in FIG. 1) having a thickness of 80 mm provided so as to cover the outer frame 132 of the frame 13 with an aerial clearance of 21. 6 mm provided between the outer frame 132 and baffle 11. The sound source identifying and measuring apparatus 10 having the above configuration is mounted to the top of a pole 16 in order to maintain the height of the sound source identifying and measuring apparatus 10 at a predetermined level. Further, an elevation reference plane is set on a horizontal plane including the center of the baffle 11, and an azimuth reference line is set in the vertical direction including the center of the baffle 11.
The frame 13 shown in an exploded view of FIG. 2 is comprised by an upper hemispherical frame 13a (FIGS. 2a to 2c) and a lower hemispherical frame 13b (FIGS. 2d to 2f). A predetermined plane including the azimuth reference line is set as a longitudinal reference plane, and an elevation angle from the center of the baffle 11 on the azimuth reference plane is set as latitude. The inner frame 131 side of the upper hemispherical frame 13a contacts the baffle 11 at 22.5˚ latitude and 67.5˚ latitude, and at every 90˚ longitude within a range between 0˚ latitude and 67.5˚ latitude. The outer frame 132 side of the upper hemispherical frame 13a contacts the weather-resistant screen 15 at 22.5˚ latitude and 67. 5˚ latitude, and at every 45˚ longitude alternately within a range between 0˚ latitude and 90˚ latitude and a range between 22.5˚ latitude and 67.5˚ latitude. The lower hemispherical frame 13b has the same configuration as the upper hemispherical frame 13a except that the frame portion near 0˚ latitude is cut out for passing the pole 16 therethrough and 1/4 part thereof is made detachable so as to allow the lower hemispherical frame 13b to step over the pole 16 for fitting to the baffle 11. The hemispherical frames 13a and 13b are fitted to the baffle 11 as shown in FIG. 1 and then fixed to each other by stoppers 17 made of a wire material. The radius of the inner frame 131 of the frame 13 is 108.4 mm, and the radius of the outer frame 132 is 130 mm. Accordingly, the aerial clearance 14 as shown in FIG. 1 has a distance of 21.6 mm.

The weather-resistant screen 15 shown in exploded views a to c of FIG. 3 is comprised by an upper hemispherical weather-resistant screen 15a and a lower hemispherical weather-resistant screen 15b. The hemispherical weather-resistant screens 15a and 15b are obtained by dividing a spherical body having a diameter of 420 mm into two to obtain two hemispheres and cutting out a hemisphere having a diameter of 260 mm from each of the obtained hemispheres such that each resultant hemisphere has a uniform thickness of 80 mm. As to the lower hemispherical weather-resistant screen 15b, a hole 18 for passing the pole 16 shown in FIG. 1 therethrough is formed in the center portion, and a slit 19 extending up to the center is formed so as to allow the lower hemispherical weather-resistant screen 15b to step over the pole 16. The hemispherical weather-resistant screens 15a and 15b are individually provided in order to cover the entire area of the outer frame 132 of the frame 13 fitted to the baffle 11 and then fixed using U-shaped stoppers made of a wire material.

Although the baffle 11 is formed into a spherical shape having a diameter of about 216. 8 mm in the above embodiment, the size of the baffle 11 may arbitrarily set, and the shape thereof may be hemispheric, polyhedral, or the like. It is only necessary for the baffle 11 to have a structure preventing sound transmitting therethrough but allowing information of sound diffracted around the surface thereof to be obtained. The baffle 11 incorporates main bodies of the microphones 12 incorporating preamplifiers thereof and connecting cables and can suppress disturbance of sound field around the baffle 11 to thereby accurately identify a sound source. The baffle 11 may be made of any material, such as stainless steel, aluminum alloy, or copper alloy, as long as it ensures an appropriate mechanical strength. The surface of the baffle 11 may be subjected to mirror finishing or roughening. Further, a sound absorbing material may be adhered to the surface of the baffle 11. That is, the baffle 11 may have any shape or may be made of any material as long as the plurality of microphones 12 each having a sound collection section on the surface of the baffle 11 can acquire analysis information of a sound source equally from all directions around the baffle 11 and perform accurate analysis of the coming direction of sound from a sound source and accurate estimation of the intensity of sound of the sound source. In the case where the baffle 11 has a hemispherical shape, the baffle 11 may be configured to acquire only a sound source located above the installation surface of the baffle 11.

Although a seal member 121 is provided between the baffle 11 and each microphone 12 in the above embodiment, any structure may be adopted as long as it prevents water or dust from entering inside the baffle 11. Further, the components comprising the sound source identifying andmeasuring apparatus 10 may be subjected to water proofing or water repellent treatment for water protection purpose.

Although 16 microphones of microphones 12 are used in the above embodiment, the number of the microphones 12 provided in the baffle 11 may be equal to or more than a minimum required number corresponding to the dimension in which the sound source identification is made. It is possible to use 2 microphones when the sound source identification is made in one dimension, 3 microphones when the sound source identification is made in two dimensions, and 4 microphones when the sound source identification is made in three dimensions. The more the number of the microphones 12, the more the accuracy and stability of a result of the sound source identification are improved. A three-dimensional coordinate system represented by arbitrary (x, y, z) is set for the positions of the microphones 12, and it can be identified the originating microphone 12 that obtains the sound.

Although the microphone 12 has waterproof property in the above embodiment, a commonly-used dynamic type or condenser type microphone may be used. Incidentally, the condenser type microphone is highly sensitive but susceptible to humidity. The waterproof property of the microphone 12 can reduce influence of humidity or moisture such as rain water in outdoor measurement.

Further, the microphone 12 may be directional or omnidirectional. A bandpass filter or a filter specialized for a target sound source may be used for the microphone 12 for achievement of further identification accuracy. The bandpass filter is provided in a receiving system at the rear stage of the microphone 12. As the filter specialized for a target sound source, a filter specialized for recognition of, e.g., an aircraft can be taken as an example. Incidentally, a general noise measurement is performed by using frequency characteristic A called aural characteristics representing characteristics of human ears, which is prescribed by various laws, JIS, ISO, and the like in all over the world. The waterproof microphone 12 of the present embodiment has frequency characteristics close to the frequency characteristic A; and thus, a bandpass filter is not provided.

Although the aerial clearance 14 provided between the baffle 11 and weather-resistant screen 15 is ensured by the two-tiered structure constituted by the inner frame 131 and outer frame 132 of the frame 13 in the above embodiment, the frame 13 may have any structure as long as the aerial clearance 14 can be ensured. Further, the weather-resistant careen 15 may be provided in contact with the baffle 11 so as not to provide the aerial clearance 14. The aerial clearance 14 has a function of preventing dew condensation caused due to direct contact between the weather-resistant screen 15 containing water and baffle 11, microphones 12, and components incorporated in the baffle 11. Further, even if the weather-resistant screen 15 deviates from its position by strong wind, it is possible to prevent occurrence of rubbing noise with the microphones 12.

Further, a thin cloth 151 may be provided between the frame 13 and weather-resistant screen 15. The thin cloth 151 is featured in that it is not only small in thickness but also gives little acoustic influence such as sound reflection or absorption. For example, a material such as nylon stocking may be used for the thin cloth 151. Further, waterproof spray may be sprayed onto the thin cloth 151 to impart drip-proofness by which external water is not permeated through the thin cloth 151 but repelled from the surface thereof. This allows droplets of rain water conducted and drooped through the screen to be dropped along the outer surface of the cloth 151 to prevent the droplets from being dropped onto the microphones 12 inside the cloth 151.

The frame 13 only needs to be resistant to corrosion. Further, the thickness of the frame 13 may be arbitrarily set as long as an appropriate mechanical strength can be ensured. For example, metal such as aluminum may be used as the material of the frame 13. In the case where the frame 13 made of aluminum is adopted, a ground may be provided in order to prevent occurrence of a problem in which a discharge sound caused due to charging of static electricity is captured by the microphones 12 to disturb noise measurement operation.

Although the thickness of the weather-resistant screen 15 is set to 80 mm in the above embodiment, the thickness of the screen 15 may arbitrarily be set. The larger the thickness of the weather-resistant screen 15, the larger the distance between the microphones 12 and the surface of the screen 15 that catches the wind. Thus, the higher wind noise reduction effect can be obtained. The weather-resistant screen 15 prevents wind noise which is generated when the microphone 12 is directly exposed to wind and the vibrating membrane of the microphone 12 is subjected to wind pressure to react. Further, the weather-resistant screen 15 prevents to impact and to react the rain water or the like directly to the microphone 12. As described above, the use of the weather-resistant screen 15 is effective in eliminating sounds other than a target sound to reduce missing in measurement results. The weather-resistant screen 15 may be made of a material such as urethane or polyurethane.

Preferably, the sound source identifying and measuring apparatus 10 has a level adjuster for setting the height in the vertical direction. The level adjuster may be fitted to a predetermined position of the pole 16, connected to an elongated member different from the pole 16 which is arranged in perpendicular to the installation surface, and fixed by screws or wing screws after adjustment of the height of the sound source identifying and measuring apparatus 10 in the vertical direction at the connecting portion. By conducting the level adjustment depending on the measurement location, it is possible to set identification parameters of sound coming from above and below in accordance with the characteristics of the measurement location. Further, the level adjuster may be controlled via a communication line or may be automatically controlled by an optimization function.

The pole 16 supporting the sound source identifying and measuring apparatus 10 may be installed using a base such as a tripod or a support partition to be fixed to the installation surface for stabilization or may directly be embedded in the ground so as to maintain a horizontal state of the elevation reference plane of the baffle 11 throughout the entire measurement period. The pole 16 may be made of any material, such as aluminum metal or concrete, as long as it can support the sound source identifying and measuring apparatus 10 and minimize influence of vibration around the apparatus.

Preferably, the sound source identifying and measuring apparatus 10 has a direction adjuster for setting a predetermined azimuth reference line and a predetermined elevation reference plane. Since the baffle 11 is maintained in a horizontal state as described above, the elevation reference plane can be set in the horizontal direction. The azimuth reference line may be set by using a hinge or the like attached to the pole 16 and the elongated member. In the case of an elongated member fixed by a tripod, a rubber sheet or the like may be inserted between respective legs of the tripod and installation points. Further, the direction adjuster may be controlled via a communication line or may be automatically controlled by an optimization function. Further, the azimuth reference line may be set by using a compass. Anyway, all that is required is to set a fixed elevation reference plane and a fixed azimuth reference line which can be used as references throughout the entire measurement period. By setting the fixed elevation reference plane and fixed azimuth reference line in this manner, it is possible to grasp correct positions of a target sound source and untargeted sound sources.

<Sound Source Identifying and Measuring System>

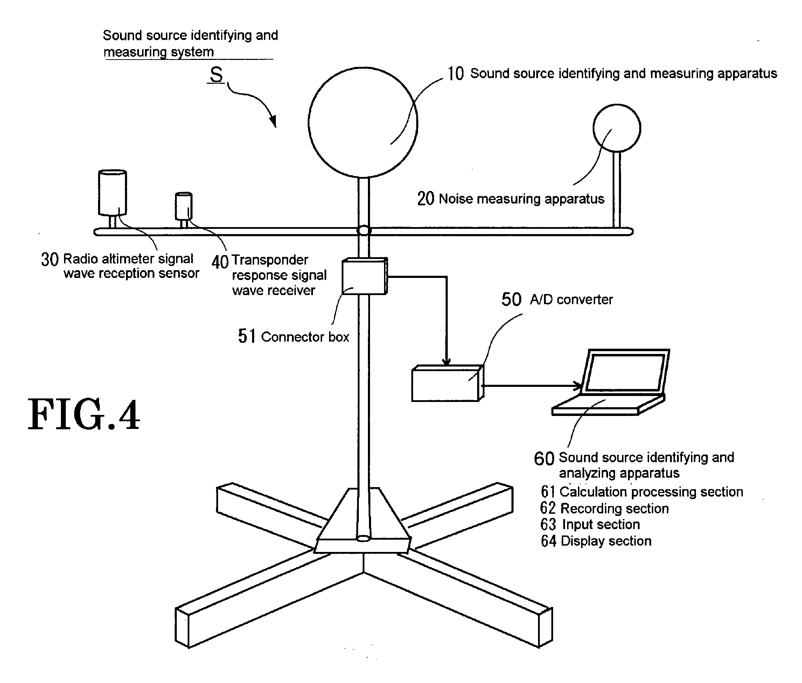

A sound source identifying and measuring system S shown in the perspective view of FIG. 4 is a system for identifying a target sound source among a single or plurality of sound sources existing in all the directions and measures the identified target sound source. The sound source identifying and measuring system S according to the present embodiment targets aircraft noise and includes the abovementioned sound source identifying and measuring apparatus 10, a noise measuring apparatus 20, a radio altimeter signal wave reception sensor 30, a transponder response signal wave receiver 40, an A/D converter 50, and a sound source identifying and analyzing apparatus 60. The sound source identifying and analyzing apparatus 60 includes a calculation processing section 61, a recording section 62, a display section 63, and an input section 64.

The noise measuring apparatus 20 is an apparatus that uses an omnidirectional microphone to convert sound pressure signals of sound sources existing in all the directions into electrical signals and then uses a frequency correction circuit provided in the main body thereof to apply filtering to the electrical signals. The aerial clearance 14 and weather-resistant screen 15 are provided in the noise measuring apparatus 20 as in the sound source identifying and measuring apparatus 10, and a threshold value for a target sound source set in the sound source identifying and measuring apparatus 10 and a threshold value for the target sound source set in the noise measuring apparatus 20 are made to coincide with each other. The radio altimeter signal wave reception sensor 30 continuously receives an absolute altitude measuring radio wave which is directionally radiated downward from an aircraft and inputs/records the electric field intensity level of the radio wave.

The transponder response signal wave receiver 40 continuously receives a pulse response signal of a specified output of 1090 MHz transmitted from the aircraft and inputs and records the measured electric field intensity level of an arriving radio wave of the response signal.

The A/D converter 50 converts a sound pressure signal which is an electric analog signal collected using the microphones 12 into a digital signal.

The sound source identifying and analyzing apparatus 60 includes a calculation processing section 61, a recording section 62, a display section 63 and an input section 64 and may be realized by a note-type or desktop computer. The calculation processing section 61 performs calculation processing for the digital signal converted by the A/D converter 50 in an integrated and comprehensive manner by using implemented software to be described later. The recording section 62 uses a hard disk, a magnetic tape, and/or an optical disk to record raw data measured by the sound source identifying and measuring apparatus 10, noise measuring apparatus 20, radio altimeter signal wave reception sensor 30, and transponder response signal wave receiver 40 and a result of calculation processing that the calculation processing section 61 has performed by using the raw data. The display section 63 displays the raw data and the result of calculation processing performed by the calculation processing section. The input section 64 uses a keyboard or a touch panel to set/input parameters of a target sound source and/or untargeted sound sources for use in sound source analysis. Although the details will be given later in the description of a sound source identifying and measuring method, the use of the sound source identifying and measuring system having the above configuration enables identification of a sound source, estimation of a sound level (fluctuation) of each sound source, and analysis of the moving path or moving speed of a sound source.

The software implemented in the calculation processing section 61 uses a directional digital filter used for beamforming to perform directional digital filtering for the sound pressure signal that has been converted into a digital signal to separate the sound sources in all the directions around the baffle 11. The directional digital filter is a filter for separating noise sound sources simultaneously existing in all the directions and performs the noise sound source separation not for a fixed signal but for various signals such as the sound pressure signal, electrical signal, and digital signal converted in the A/D converter by numerical calculation. Further, identification/determination of a target sound source is made using parameters for identifying whether or not an acquired sound source is a target sound source or untargeted sound source. With the above configuration, directionality is scanned in all the directions and, at the same time, the sound sources are separated even if there exist sound sources in a plurality of directions simultaneously.

The apparatuses comprising the sound source identifying and measuring system S are connected to one another by cables. When the plurality of microphones 12 and A/D converter 50 are connected, a connector is provided in the middle of a plurality of cables extending from the microphones 12. Then the cables are connected to each other in a connector box 51 and made to run in a protective pipe as one cable.

Although the sound source identifying andmeasuring apparatus 10, noise measuring apparatus 20, radio altimeter signal wave reception sensor 30, and transponder response signal wave receiver 40 are used in the above embodiment, these apparatuses may arbitrarily combined for use depending on the situation of the measurement location. For example, in the present embodiment, the noise measuring apparatus 20 and sound source identifying and measuring apparatus 10 are provided simultaneously, and the sound source identifying and measuring apparatus 10 has only the sound source identification function as a example. Alternatively, however, the sound source identifying and measuring apparatus 10 itself can integrate the noise measurement function by the noise measuring apparatus 20. When the target sound source is sufficiently dominant relative to sound sources other than the target, there may be a case where measurement can be achieved only with the noise measuring apparatus 20.

The sound source identifying and measuring system S may further include an apparatus for acquiring parameters for narrowing down the measurement target to the target sound source. For example, it is possible to perform identification of the target sound source in consideration of parameters acquired by a weather sensor for measuring the weather environment around the measurement location, a CCD camera for photographing the direction of the sound source around the measurement location, an apparatus for generating a sound wave or optical wave so as to measure a distance from an object, and/or a radio-controlled clock for acquiring correct time. The use of the parameters acquired by the above apparatuses allows the sound source identification and measurement to be performed more economically and efficiently. The above apparatuses may be added to the sound source identifying and measuring system S as an independent apparatus or directly incorporated in the apparatuses comprising the sound source identifying and measuring system S depending on the type of a target sound source.

For example, the sound source identifying and measuring apparatus 10 captures image information by a plurality of light receiving elements provided on the baffle 11 or weather-resistant screen 15, performs image processing based on an image corresponding to the coming direction of an identified sound and, thereby, identifies an object as the sound source. As the light receiving element, a camera such as a CCD camera having a CCD and lenses, a laser light receiving element, an infrared light receiving element, and the like may be used. In the case where a camera is used as the light-receiving element, photographing ranges of adjacent light receiving elements are preferably overlapped with each other. In this case, images of a plurality of areas around the sound source corresponding to the coming direction of the sound can be captured automatically. The captured images are output as an image signal and then converted into a displayable image signal by the sound source identifying and analyzing apparatus 60. As described above, an object as the sound source can be identified as, e.g., an aircraft or an automobile by image recognition, allowing acquisition of more reliable data.

The sound source identifying and analyzing apparatus 60 includes the calculation processing section 61, recording section 62, display section 63, and input section 64. However, an interface section may be used to connect the sound source identifying and analyzing apparatus 60 with an external device such as a hard disk. Also, a communication section may be used to perform data transfer so as to allow automatic counting, data management, and calculation processing to be performed collectively in a central processing station remote from the installation location of the sound source identifying and measuring system S. Further, the calculation processing section 61 performs identification of a sound source, estimation of a sound pressure level (fluctuation) for each sound source, and time-based analysis of the moving path or moving speed of a sound source by using the implemented software. In this point, the implemented software may be an existing software or newly prepared software that is created for the use purpose of identification of a target sound source and/or an untargeted sound source. Further, in the sound source identifying and measuring system S of the present invention, the calculation processing section 61 can perform not only the estimation of noise for each sound source but also estimation of a sound pressure and a sound pressure level for each sound source by using the implemented software.

Also, the apparatuses comprising the sound source identifying and measuring system S are connected by wires, or they may be connected by radio. Further, a communication section may be used to transfer data on a public line or an ISDN line via a modem so as to allow automatic counting and data management to be performed collectively in a central processing station remote from the installation location of the sound source identifying and measuring system S. In the present embodiment, a case is described where the plurality of cables extending from the plurality of microphones 12 are connected to one cable in the connector box 51 and then connected to the A/D converter 50. In general, the cable connecting the microphones 12 and A/D converter 50 has a length of 10 m or more, so that a disadvantage such as entanglement may occur. Such a disadvantage can be prevented by the above configuration. Further, the above configuration has an advantage that replacement of only one cable extending in the protective pipe may suffice upon failure or maintenance.

Furthermore, accessories such as a ground may be attached to the parts and apparatuses comprising the sound source identifying and measuring system S for preventing noise from being mixed into acquired data. Further, functions advantageous for maintaining normal measurement in the sound source identifying and measuring system S and performing automatic measurement, such as a power source function that can handle power failure, an automatic start-up function at the time of occurrence of troubles, a maintenance function, an abnormal information notification function, and a data fault tolerance function, may be provided.

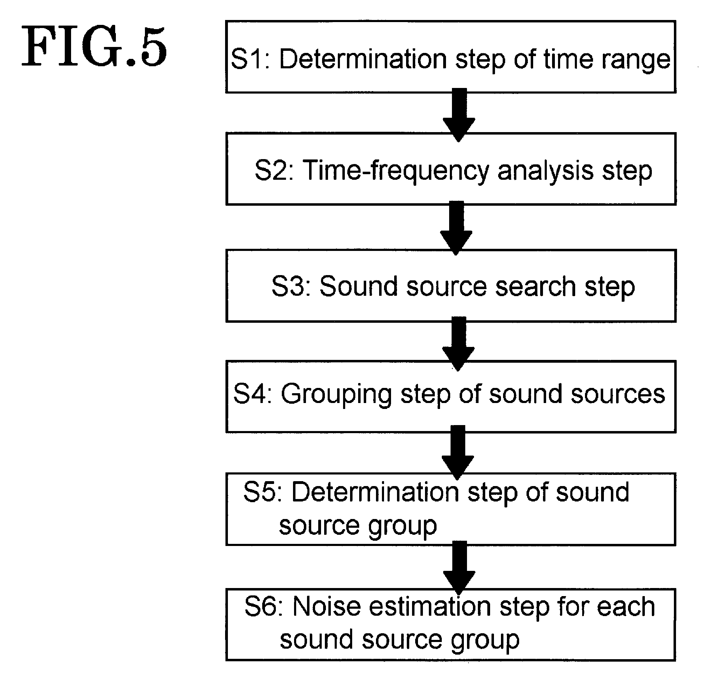

Then, a sound source identifying and measuring method performed by using the sound source identifying and measuring system S will be described with reference to FIG. 5. In the following, a case where noise is measured will be described. The sound pressure measuring method according to the present embodiment includes the following steps: determination of time range (step S1) ; time-frequency analysis (step S2); sound source search (step S3); grouping of sound sources (step S4); determination of sound source group (step S5); and noise estimation for each sound source group (step S6).

Determination of Time Range (step S1): First, a time range over which all coming directions and intensity of sound are analyzed is determined. In this example, as an analysis section over which all coming directions and intensity of sound are analyzed, a time range including noise from a target sound source is extracted from the time waveform of noise acquired from the noise measuring apparatus 20. In the case of unsteady noise, a maximum value of noise to be measured is searched for from the range including the noise to be measured, and a time range corresponding to a range (in general, a range in which the level difference from the maximum value falls within -10 dB) in which a level increase practically uninfluenced by background noise is set as the analysis section.

Time-frequency Analysis (step S2): The time-frequency analysis is performed for AC waveform acquired from the microphones 12 provided in the sound source identifying and measuring apparatus 10 or noise measuring apparatus 20. In this example, an AC waveform (sound signal) acquired from the noise measuring apparatus 20 in the analysis section is time-frequency analyzed to confirm that a characteristic frequency which is included in the noise as the main component thereof throughout the analysis section is to be included in an analyzing frequency of the sound source identifying and measuring apparatus 10.

Sound Source Search (Step S3): Then, the sound source identifying and measuring apparatus 20 performs sound source search in the analysis section to calculate, per unit time, the coming directions of sound and the intensity (contribution of to the noise at the same time point) thereof. When the intensity in only a certain direction is dominant in the intensity distribution of the sound coming direction, it is estimated that the intensity observed is from a sound source in the coming direction. If the intensities of the observed noise and sound source in the coming direction change relatively, the noise source can be identified more clearly. If the noise source moves, the distribution of the sound coming direction moves with time, and the intensity of the noise source changes relatively to that of the noise measured by the noise measuring apparatus 20.

Grouping of Sound Sources (step S4): Based on the sound source search result including azimuth and elevation data of each sound source acquired by the sound source identifying and measuring apparatus 10, information concerning movement of the circumferentially existing sound sources with passage of time are organized on a per frequency basis, and the intensities of the sound sources and influences thereof on the noise frequency characteristics are grasped in the order from the dominant sound source. Then, with attention focused on the sound source that can be determined as a dominant sound source at each time point, the sound sources in the analysis section are classified into some groups by giving an adequate condition such as restriction of the moving path or moving speed.

Determination of Sound Source Group (step S5): Based on the situation around the measurement location, it is determined whether the classified sound source is sound to be measured. If the noise direction intensity frequency characteristics from a given sound source at an attention time point is dominant over (in general, 10 dB or more higher than) other sound sources, it can be considered that the sound source predominates in the noise frequency characteristics at the noise measurement point. If a correlation between the noise direction intensity frequency characteristics and noise frequency characteristics at the noise measurement point at that time can be grasped, the frequency characteristics of the noise level at the measurement point can be estimated afterward from the direction intensity frequency characteristics of the noise arriving from the direction. This allows identification of existence of the sound arriving from a plurality of sound sources buried in the arrival sound from the dominant sound source and estimation of the level thereof. Further, by detecting a moment at which there is no influence of the sound from the dominant sound source by using the sound source identifying and measuring apparatus 10, it is possible to directly measure the level of the sound arriving from the sound source afterward. If it can be determined that a given sound is not direct sound from the noise source but a reflected sound from the ground or a wall of a neighboring building, the determined sound is associated with a corresponding direct sound, if exists. If the tone or frequency characteristics of an assumed sound source are previously grasped, it is possible to make sound determination by collation with the grasped data or actually playback the sound obtained by the directional filter function of the sound source identifying and measuring apparatus 20 for confirmation and identification.

Noise Estimation for Each Sound Source Group (step S6) : The time variation of noise is estimated for each sound source group. The reflected sound group is power-combined with a corresponding direct sound group for evaluation. In the case where the sound source is moved, the moving path or moving speed is analyzed as needed.

Although a case where noise is measured in the description of the above embodiment, a sound pressure can also be measured. In this case, the pressure sound is measured by using an omnidirectional microphone and, in parallel with this, coming direction of sound arriving from surroundings is observed by the sound source identifying and measuring apparatus 10. Then, with attention focused on the sound pressure and direction of the arrival dominant sound for each moment, and the continuity of the temporal change and/or frequency characteristics, etc. , are associated with each other to grasp the arrival sound included in the sound pressure for each sound source, whereby highly reliable sound pressure data can be obtained. Further, not only the sound pressure, but also the sound pressure level can be measured in the manner as described above.

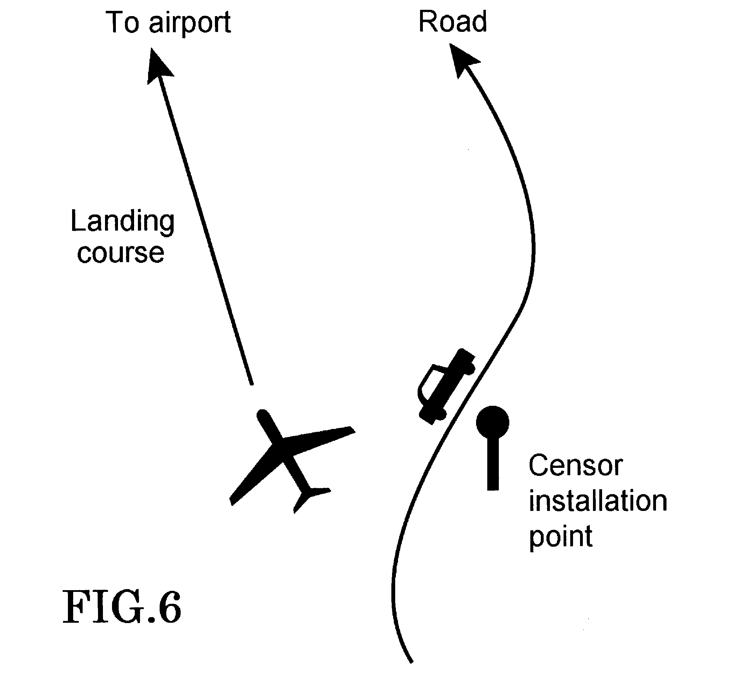

Then, an analysis result obtained using the sound source identifying and measuring system S will be described. As shown in the conceptual view of FIG. 6, there may be a case where a road exists in the vicinity of the measurement location and where automobile noise having a level higher than that of aircraft noise is observed when the aircraft passes, thus posing a problem.

(Analysis Example in Case Where Only Aircraft Exists)

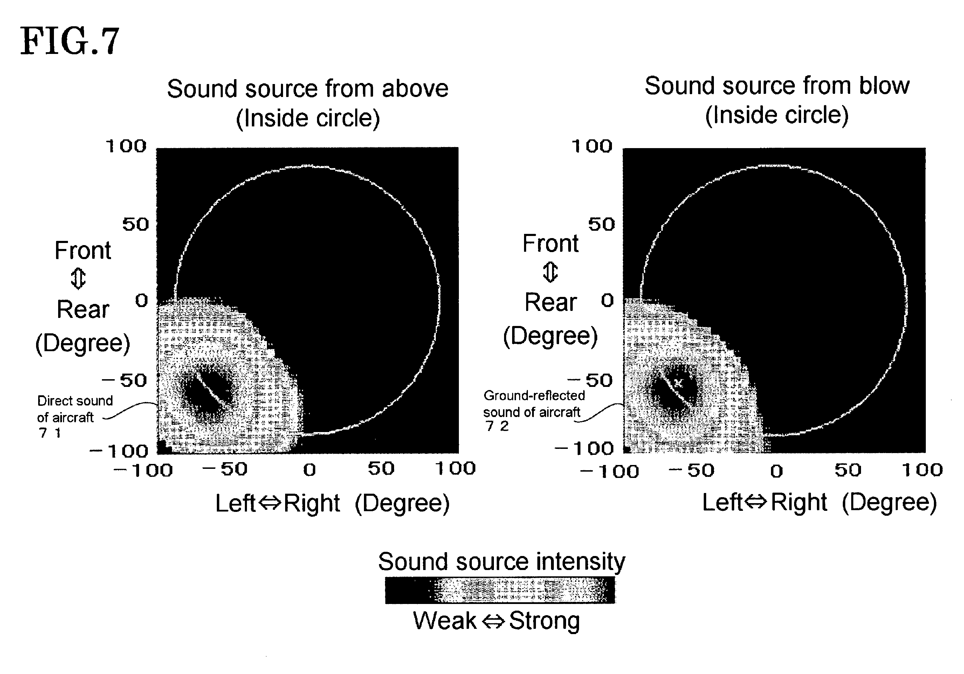

In FIG. 7 which is a color-filled contour graph of sound, inside of a left side circle of FIG. 7 is a sound source from above the sound source identifying and measuring apparatus 10 which indicates a direct sound (rear left contour) of the aircraft, and inside of a right side circle of FIG. 7 is a sound source from below the sound source identifying and measuring apparatus 10 which indicates a reflected sound (front left contour) of the aircraft, which are obtained based on the azimuth and elevation data. This reveals that a direct sound 71 of the aircraft and ground-reflected sound 72 are generated above and below of the boundary with the ground. These contour graphs are obtained by the following processes. That is, the amplitude characteristics and phase characteristics of respective sound signals captured by the plurality of microphones 12 are calculated through calculation processing, the obtained signal information and analysis information of a sound field around the baffle are integrated, and calculation processing for emphasizing sound arriving from a specific direction is performed for all directions to identify the coming direction of the sound from the sound source, whereby identification of the coming direction of the sound from the sound sources in all the directions and estimation of intensity of the sound of the sound source are made simultaneously.

(Analysis Example in Case Where Automobile Passes When Aircraft Passes)

(Analysis Example in Case Where Only Aircraft Exists)

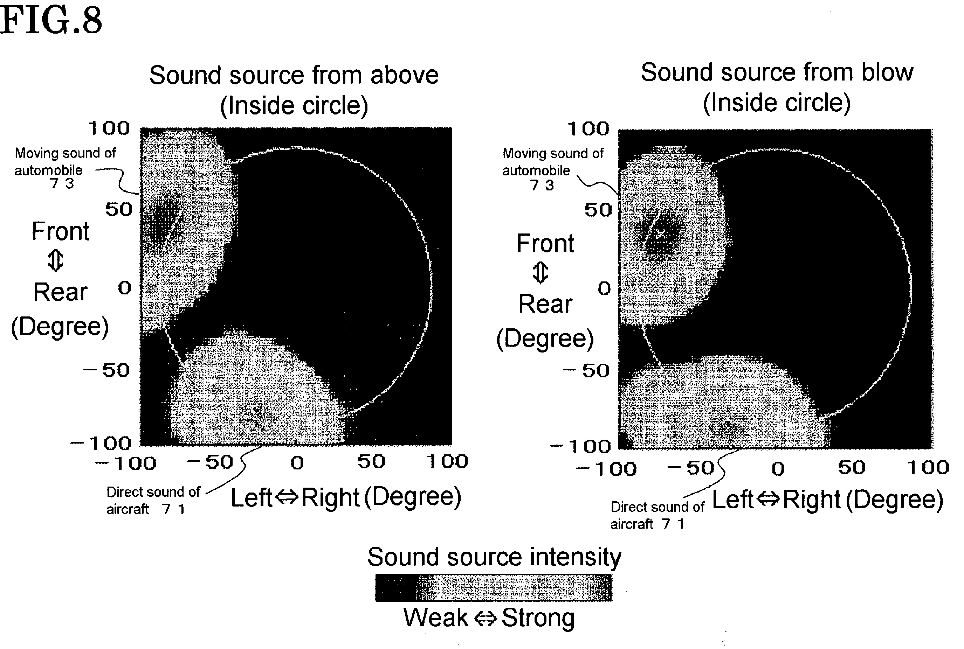

In FIG. 8 which is a color-filled contour graph of sound, inside of a left side circle of FIG. 8 is a sound source from above the sound source identifying and measuring apparatus 10 which indicates a direct sound 71 (rear left contour) of the aircraft, and outside of the same is a sound source from below the sound source identifying and measuring apparatus 10 which indicates a direct sound 73 (front left contour) of the automobile, which are obtained based on the azimuth and elevation data. Further, inside of a right side circle of FIG. 8 is a sound source from below the sound source identifying and measuring apparatus 10 which indicates a traveling sound 73 (front left contour) of the automobile, and outside of the same is a sound source from above the sound source identifying and measuring apparatus 10 which indicates a direct sound 71 (rear left contour) of the aircraft. This reveals that the direct sound 71 of the aircraft is generated from the rear left above the sound source identifying and measuring apparatus 10 and, at the same time, the driving sound 73 of the automobile is generated when the automobile passes from the front left below the sound source identifying and measuring apparatus 10.

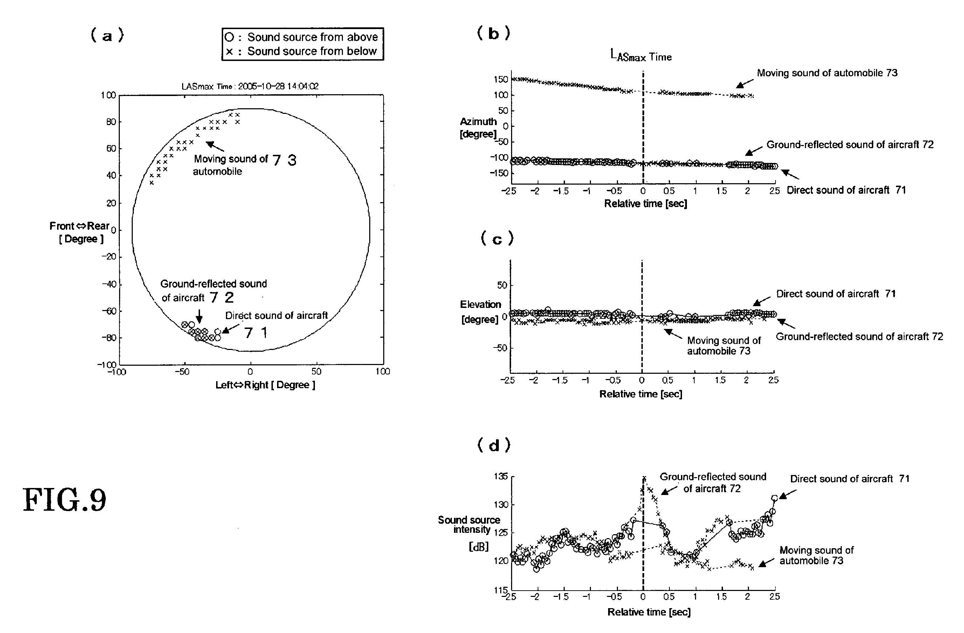

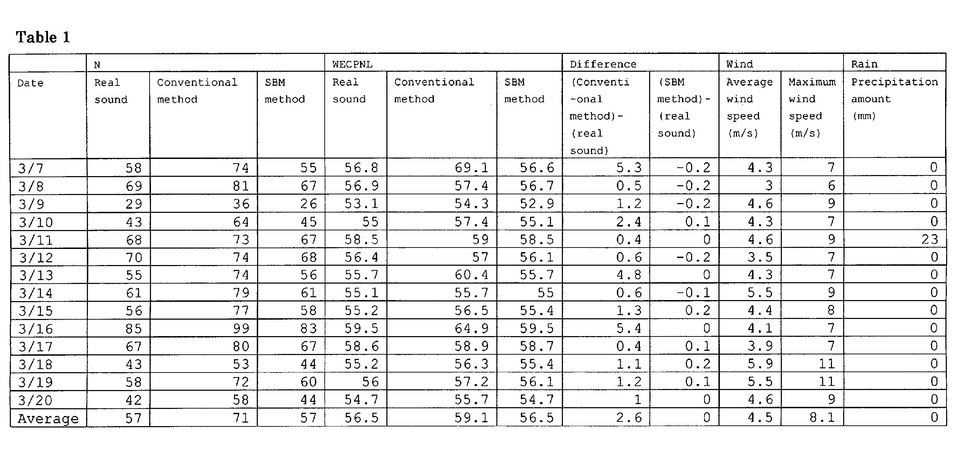

FIG. 9a is an azimuthal equidistant projection on which the three-dimensional position of sound sources are planar projected. In FIG. 9a, a plotted ○ represents a sound source on the upper hemisphere, and a plotted "×" represents a sound source on the lower hemisphere. A sound source represented by the lower left "○" is the direct sound 71 of the aircraft, and sound source represented by the lower left "×" is the ground-reflected sound 72 of the aircraft, and sound source represented by the upper left "×" is a sound source other than that of the aircraft (actually, the traveling sound 73 of the automobile). This analysis result coincides with a result of a manual measurement that has been performed separately. FIG. 9b represents the azimuths of the sound source positions, FIG. 9c represents the elevations thereof, and FIG. 9d represents the temporal changes of the intensities of the sound sources. In each illustration, the position of the center broken line indicates an observation time of the maximum noise level observed by the noise measuring apparatus 20. The direct and reflected sounds of the aircraft and automobile change with time, and it can be seen from FIGS. 9b to 9d that the coming direction and sound source intensity change with time. In this case, the sound source intensity of the aircraft sound which is a target sound is dominant at the time when the maximum noise level is observed, so that the target sound is determined to be the aircraft noise.

In the above embodiment, the noise is measured at the noise measurement point by using the noise measuring apparatus 20 and, in parallel with this, the coming direction of sound coming from surrounding is measured by using the sound source identifying and measuring apparatus 10. Then, noise and direction of the dominant arrival sound are estimated for each moment to identify a sound source, the continuity of the temporal change of the sound source measured by the sound source identifying and analyzing apparatus 60, change speed, and/or frequency characteristics, etc., are associated with each other to grasp the arrival noise included in the noise for each sound source, whereby highly reliable noise data can be obtained. The above association between the noise and sound source measured by the sound source identifying and analyzing apparatus 60 may be made based simultaneously on the continuity of the temporal change and frequency characteristics or based on one of the temporal change and frequency characteristics.

In the above embodiment, a description is made to a case of the observation time of the maximum noise level measured by the noise measuring apparatus 20. However, the association between the continuity of the temporal change of the sound source, change speed, and/or frequency characteristics, etc., allows application to a case where arrival sounds from a plurality of sources arrive in a mixed manner and the magnitude relation between the sounds changes with time in a complicated manner, e.g., to a case where steady noise is generated from a fixed location, a case where varied noise is generated from a fixed location, a case where steady noise is generated from a moving sound source, and a case where varied noise is generated from a moving sound source.

As described above, every noise data can be captured without influence of the measurement data capturing condition, reducing missing of the measurement data. Further, after the noise data capturing, noise data corresponding to the sound source identified by the sound source identifying and measuring apparatus 10 is identified by the analysis made by the sound source identifying and measuring apparatus 10, highly reliable measurement data can be obtained for an automatic measurement. In other words, sound source determination corresponding to "cocktail-party effect" of the human auditory sense can be achieved, guaranteeing reliability equivalent to a manual measurement.

(Measurement Example 1)

Table 1 presents data relating to aircrafts arriving and departing at the New Tokyo International Airport (Haneda Airport) actually acquired by using the sound source identifying and measuring system in the time period from 7 to 20 March 2007. For comparison, a manual measurement (real sound: real sound listening method), a conventional type automatic measurement (conventional method: radio wave reception method), and measurement using the sound source identifying and measuring system S (SBM method) were performed. N in the table 1 indicates the number of times aircraft noise is measured. WECPNL is an index for evaluating the aircraft noise and is called a weighted equivalent continuous perceived noise level. The WECPNL is calculated based on the peak level power average value 10 dB or more higher than background noise and the number of all aircrafts for which measurement has been performed per day by using the following equations.
[Numeral 1]

$$WECPNL = dB(A) + 10 \log 10 N - 27$$

$dB(A)$: peak level power average value of all aircrafts to be measured per day

$$N = N2 + 3N3 + 10 \ (N1 + N4)$$

(N1: number of aircrafts (0:00 to 7:00), N2: number of aircrafts (7:00 to 19:00), N3: number of aircrafts (19:00 to 22:00), N4: number of aircrafts (from 22:00 to 24:00))

The WECPNL values of respective measurements are compared with reference to those of the manual measurement on a per day basis. In the case of the conventional type automatic measurement (conventional method), there is a day in which a difference up to 5.4 occurs. On the other hand, in the measurement by using the sound source identifying and measuring system S (SBM method) of the present embodiment, a difference within 0.2 in all days. The average value over two weeks is 56.5 in the manual measurement (real sound), 59.1 in the conventional type automatic measurement (conventional method), and 56.5 in the measurement according to the present embodiment. As described above, a large difference is caused between the results of the conventional type automatic measurement and manual measurement, while results of the measurement according to the present embodiment and those of the manual measurement almost coincide with each other. Incidentally, the logarithm is used in the calculation expression for calculating the WECPNL, so that a difference of 2.6 in the WECPNL value corresponds to a difference of about 1.8 times in terms of an actual noise value. As described above, at a location where the S/N ratio is small, an untargeted sound source equivalent to more than a target sound source is also captured unwontedly in the conventional automatic measurement, resulting in degradation in reliability. On the other hand, the measurement according to the present embodiment has reliability equal to that of the manual measurement.
As shown in the wind speed data of Table 1, an average wind speed of 4.5 m/s was observed at the measurement location, and there were days in which a maximum wind speed of 11 m/s was observed (see 18 and 19 March). Even in such a strong wind day, substantially the same measurement values as those in the manual measurement have been observed in the measurement using the sound source identifying and measuring system S of the present embodiment throughout the measurement period.
Further, as shown in the precipitation data of Table 1, a precipitation amount of 23 mm was observed on 11 March at the measurement location. Even in such a rainy day, substantially the same measurement values as those in the manual measurement have been observed in the measurement by using the sound source identifying and measuring system S of the present embodiment throughout the measurement period.
[Table 1]

| Date | N | | | WECPNL | | | Difference | | Wind Rain | | |
|---|---|---|---|---|---|---|---|---|---|---|---|
| | Real sound | Conventional method | SBM method | Real sound | Conventional method | SBM method | (Conventional method) - (real sound) | (SBM method) - (real sound) | Average wind speed (m/s) | Maximum wind speed (m/s) | Precipitation amount (mm) |
| 3/7 | 58 | 74 | 55 | 56.8 | 69.1 | 56.6 | 5.3 | -0.2 | 4.3 | 7 | 0 |
| 3/8 | 69 | 81 | 67 | 56.9 | 57.4 | 56.7 | 0.5 | -0.2 | 3 | 6 | 0 |
| 3/9 | 29 | 36 | 26 | 53.1 | 54.3 | 52.9 | 1.2 | -0.2 | 4.6 | 9 | 0 |
| 3/10 | 43 | 64 | 45 | 55 | 57.4 | 55.1 | 2.4 | 0.1 | 4.3 | 7 | 0 |
| 3/11 | 68 | 67 | 58.5 | 58.5 | 59 | 58.5 | 0.4 | 0 | 4.6 | 9 | 23 |
| 3/12 | 70 | 74 | 68 | 56.4 | 57 | 56.1 | 0.6 | -0.2 | 3.5 | 7 | 0 |
| 3/13 | 55 | 74 | 56 | 55.7 | 60.4 | 55.7 | 4.8 | 0 | 4.3 | 7 | 0 |
| 3/14 | 61 | 79 | 61 | 55.1 | 55.7 | 55 | 0.6 | -0.1 | 5.5 | 9 | 0 |
| 3/15 | 56 | 77 | 58 | 55.2 | 56.5 | 55.4 | 1.3 | 0.2 | 4.4 | 8 | 0 |
| 3/16 | 85 | 99 | 83 | 59.5 | 64.9 | 59.5 | 5.4 | 0 | 4.1 | 7 | 0 |
| 3/17 | 67 | 80 | 67 | 58.6 | 58.9 | 58.7 | 0.4 | 0.1 | 3.9 | 7 | 0 |
| 3/18 | 43 | 53 | 44 | 55.2 | 56.3 | 55.4 | 1.1 | 0.2 | 5.9 | 11 | 0 |
| 3/19 | 58 | 72 | 60 | 56 | 57.2 | 56.1 | 1.2 | 0.1 | 5.5 | 11 | 0 |
| 3/20 | 42 | 58 | 44 | 54.7 | 55.7 | 54.7 | 1 | 0 | 4.6 | 9 | 0 |
| Average | 57 | 71 | 57 | 56.5 | 59.1 | 56.5 | 2.6 | 0 | 4.5 | 8.1 | 0 |

EP 2 233 897 A1

(Measurement Example 2)

Table 2 shows a comparison among the number of measurement data (Groups A to D) relating to the aircraft noise measurement. Group A presents the number of measurement data in the case where the transponder response signal wave receiver 40 is not used. Group B presents the number of measurement data in the case where the transponder response signal wave receiver 40 is used. Group C presents the number of measurement data in the case where the transponder response signal wave receiver 40 is used and sound source identifying and measuring analysis of the present embodiment is performed. Group D presents the number of measurement data in the manual measurement. More concretely, Group A adopts measurement values satisfying a noise condition such as one where the time during which a noise value continuously exceeds a set threshold is longer than a preset time as the measurement data to be counted. Group B adopts measurement values satisfying the condition set for Group A and satisfying a reception condition of transponder response signal wave such as one where the transponder response signal wave exceeds a preset electric field intensity threshold in the same manner as in the noise condition as the measurement data to be counted. Group C adopts measurement values satisfying the condition set for Group B and determined to be the aircraft sound based on the sound source identifying and measuring analysis of the present embodiment as the measurement data to be counted. Group D adopts measurement values for which the noise at the maximum noise level occurrence time is determined to be the aircraft sound which is obtained by hearing recorded real sound data one by one by human's ear as the measurement data to be counted.

In Group A, the daily average number of times of determination of the aircraft sound is 337, and in Group B, 116. From a comparison between Group A and Group B, it can be seen that the use of the transponder response signal wave receiver 40 reduces the recording data amount by about 66%. As described above, by using the transponder response signal wave receiver 40, it is possible to narrow down the number of noise data to be analyzed.

In Group C, the daily average number of times of determination of the aircraft sound is 57. From a comparison between Group B and Group C, it can be seen that an application of the sound source identifying and measuring analysis according to the present embodiment to the data narrowed down by the use of the transponder response signal wave receiver 40 reduces the recording data amount by about 51%, thus realizing a further narrowing down pf the noise data amount. The daily average number of times of determination of the aircraft sound in Group D is 57. That is, the data amount in Group C is the same as that in the manual measurement. Further, the WECPNL value shown in Table 1 is substantially the same as that in the manual measurement, so that the system S of the present embodiment can perform measurement in the same manner as the manual measurement in terms of data amount and quality.

[Table 2]

| Date | A | B | C | D |
|---|---|---|---|---|
| 3/7 | 471 | 129 | 55 | 58 |
| 3/8 | 433 | 149 | 67 | 69 |
| 3/9 | 281 | 121 | 26 | 29 |
| 3/10 | 423 | 117 | 45 | 43 |
| 3/11 | 259 | 103 | 67 | 68 |
| 3/12 | 291 | 105 | 68 | 70 |
| 3/13 | 391 | 112 | 56 | 55 |
| 3/14 | 329 | 128 | 61 | 61 |
| 3/15 | 262 | 112 | 58 | 56 |
| 3/16 | 365 | 141 | 83 | 85 |
| 3/17 | 409 | 100 | 67 | 67 |
| 3/18 | 216 | 96 | 44 | 43 |
| 3/19 | 261 | 111 | 60 | 58 |
| 3/20 | 323 | 97 | 44 | 42 |
| Total | 4714 | 1621 | 801 | 804 |

(continued)

| Date | A | B | C | D |
|------|-----|-----|----|----|
| Average | 337 | 116 | 57 | 57 |

A: In case where transponder response signal wave receiver is not used
B: In case where transponder response signal wave receiver is used
C: In case where transponder response signal wave receiver is used and sound source identifying and measuring analysis of the present embodiment is performed
D: Manual measurement

(Measurement Example 3)

Table 3 shows a measurement result of the WECPNL value in an environment where the aircraft sound and speech of disaster prevention radio broadcast overlap each other depending on the presence/absence of an exclusion parameter. In the present embodiment, a speaker for the disaster prevention radio broadcast exists above the baffle 11 and loud sound is periodically generated, so that coming direction information of the sound of the disaster prevention radio broadcast speaker including the azimuth and elevation thereof is previously set as an exclusion parameter so as to determine the sound arriving in the set arrival information direction as the speech of the disaster prevention radio broadcast and exclude the speech from the sound to be measured.
In the case where the previously set exclusion parameter was used to delete data of the speech of the disaster prevention radio broadcast when aircraft sound and 88.6 dB disaster prevention radio broadcast speech overlapped each other on 16 March, the WECPNL value of this day was 59. 5, which is the same value as the WECPNL value obtained in the real sound listening method. On the other hand, in the case where the exclusion parameter is not used, the WECPNL value was 64.9 which largely differs from the WECPNL value obtained in the real sound listening method. This reveals that the use of the sound source identifying and measuring system S of the present embodiment prevents misrecognition between the aircraft sound which is the target sound source and untargeted sound source, i.e., sound other than the aircraft sound, thereby performing sound source identification and measurement with higher accuracy. Incidentally, in the WECPNL, Lden, or the like which is a currently available index for evaluation of the aircraft noise, the noise power levels are averaged for each aircraft per day, so that erroneous observation of a high noise level greatly affects the evaluation amount per day. Therefore, to previously identify a high noise level existing around the sound source identifying and measuring system S and exclude the high noise level is of great significance.
[Table 3]

| WECPNL | | |
|--------|--------|--------|
| Exclusion parameter is not used | Exclusion parameter is used | Real sound listening |
| 64.9 | 59.5 | 59.5 |

Further, the measurement results obtained in the manual measurement and in the measurement using the sound source identifying and measuring system S of the present embodiment almost coincide with each other regardless of presence/absence of wind or rain. This is brought about by the effect of the aerial clearance 14 and weather-resistant screen 15 that substantially eliminate influence of wind noise caused by wind and rain sound or droplet sound caused by rain on the measurement and the effect of the waterproof microphone 12 and seal member 121 provided between the baffle 11 and microphone 12 that prevent entering of water or dust. As described above, the use of the sound source identifying and measuring system S of the present invention eliminates elements influencing the sound source identification and measurement attributed to an exterior environment such as wind or rain, thus enabling acquisition of stable data in an outdoor environment for a long period of time.
Also, the amount and quality of measurement data obtained in the manual measurement and in the measurement by using the sound source identifying and measuring system S of the present embodiment almost coincide with each other. Such a reduction in the data amount allows a reduction in the storage capacity space, power saving/time saving in the calculation by using the data, thereby producing an effect advantageous for the automatic measurement.

Furthermore, in the sound source identification and measurement by using the sound source identifying and measuring system S, the use of the exclusion parameter allows an improvement in the accuracy. As described above, even in a location where the S/N ratio corresponding to the difference between the target sound source and untargeted sound source is small, it is possible to improve the accuracy of the target sound source identification and measurement by using identification information of the target sound source and/or untargeted sound source.

Further, in the above description of the measurement examples, a plurality of sound sources contributing to the noise level measured by the omnidirectional noise measuring apparatus 20 are separated in terms of the coming direction thereof for analysis, whereby whether or not the sound source having the greatest contribution is the aircraft noise can automatically be determined with high accuracy. Further, identification and measurement or estimation of ground sound such as taxiing, reverse, engine run-ups, and APU can be achieved. Further, it is possible to identify and measure or estimate a one-shot noise level LAE by excluding a section where the contribution of overlapping sound is great.

The above configuration, analysis, and measurement are merely examples and may be variously modified without departing the scope of the present invention.

Industrial Applicability

Contribution of a single or plurality of indoor/outdoor sound sources such as various vehicles such as automobile, airplane, and vessel, electrical appliances, electronic devices, home electric appliances, factories, facilities, etc. to the noise level are separated in terms of the coming direction for analysis, whereby whether or not a given sound source is a target sound source can be identified/determined for determination of the sound source intensity and sound pressure level of the sound source.

**Claims**

1. A sound source identifying and measuring apparatus for identifying a target sound source among untargeted sound sources comprising:

   a baffle formed into a sphere, a hemisphere, or a polyhedron;
   a plurality of microphones having a sound collection section on the surface of the baffle; and
   a weather-resistant screen formed to cover the outer surface of the baffle.

2. The sound source identifying and measuring apparatus according to claim 1, comprising:

   a frame providing an inner frame and an outer frame, which contacts with the outer surface of the baffle on the inner frame side; and
   a weather-resistant screen contacting with the outer frame and covers the outer surface of the baffle through an aerial clearance.

3. The sound source identifying and measuring apparatus according to claim 1 or claim 2, comprising a bandpass filter and/or a filter specialized for a target sound source in a receiving system of the microphones.

4. The sound source identifying and measuring apparatus according to any one of claims 1 to 3, wherein the microphones each have waterproof or drip proof property, and/or,
   a seal member is provided between the baffle and microphones.

5. The sound source identifying and measuring apparatus according to any one of claims 1 to 4, comprising a level adjuster for setting the vertical direction height of the baffle relative to the installation position.

6. The sound source identifying and measuring apparatus according to any of claims 1 to 5, **characterized by** comprising a direction adj uster for setting an azimuth reference line and an elevation reference plane of the baffle.

7. A sound source identifying and measuring system, comprising:

   the sound source identifying and measuring apparatus as claimed in any one of claims 1 to 6;

an A/D converter that converts an analog signal which is a sound pressure signal around the baffle obtained through the microphones into a digital signal; and

the sound source identifying and analyzing apparatus that performs identification of the sound source direction, estimation of a sound pressure level for each sound source, and analysis of the moving path and moving speed of the sound source.

8. The sound source identifying and measuring system according to claim 7, wherein
the sound source identifying and analyzing apparatus has a calculation processing section, and
the calculation processing section performs numerical calculation to apply directional digital filtering to a digital signal.

9. The sound source identifying and measuring system according to claim 7 or claim 8, wherein
the sound source identifying and analyzing apparatus has an input section, and
the input section receives as an input target sound source identification parameter and/or untargeted sound source identification parameter to select the target sound source and/or exclude the untargeted sound source.

10. The sound source identifying and measuring system according to any of claims 7 to 9, wherein
image information corresponding to the coming direction of specified sound is captured, and image processing is performed in the sound source identifying and analyzing apparatus based on the captured image information so as to identify an object as a target sound source.

11. The sound source identifying and measuring system according to any of claims 7 to 10, further comprising an omnidirectional noise measuring apparatus.

12. The sound source identifying and measuring system according to any of claims 7 to 11, further comprising a radio altimeter signal wave receiver and/or a transponder response signal wave receiver.

13. A sound source identifying and measuring method for identifying a target sound source from one or a plurality of untargeted sound sources comprising:

a determination step of determining a time range corresponding to an analysis section in which the analysis of all coming directions of sound and intensity thereof are performed;
an analysis step of analyzing the time-frequency acquired from the microphones;
a search step of performing sound source search in the analysis section by performing the analysis of the all coming directions of sound and the intensity thereof;
a grouping step of classifying sound sources into sound source groups in terms of a frequency based on the sound source search result obtained for each sound source;
a determination step of determining a target sound source group among the sound source groups using a target sound source identification parameter and/or untargeted sound source identification parameter; and
an estimation step of estimating the time variation of sound for each sound source group.

10 Sound source identifying and measuring apparatus

14 Aerial clearance

13 Frame

12

121

11 Baffle

12 12

121

121

121 Seal member

12 Microphone

17

17 Stopper

151 Cloth

12

FIG.1

16 Pole

# FIG.2

**1 3 Frame**

(a) Perspective view

Upper hemispherical frame
1 3 a

Outer frame
1 3 2

Inner frame
1 3 1

(b) Front view

Upper hemispherical frame
1 3 a

67.5°
22.5°

Outer frame 1 3 2  Inner frame 1 3 1

108.4   21.6
130.0

(c) Plan view

Upper hemispherical frame
1 3 a

φ200.3
φ240.2
φ255.0

φ83.0  φ99.5

(d) Perspective view

Lower hemispherical frame
1 3 b

Inner frame
1 3 1

Outer frame
1 3 2

(e) Front view

Lower hemispherical frame
1 3 b

21.6   108.4   130.0

22.5°
67.5°

Inner frame
1 3 1

Outer frame
1 3 2

(f) Plan view

Lower hemispherical frame
1 3 b

φ200.3
φ240.2

φ83.0  φ99.5

EP 2 233 897 A1

<u>1 5</u> Weather-resistant screen

# FIG.3

(a) Perspective view

1 5 a
Upper hemispherical
weather-resistant screen

1 5 b
Lower hemispherical
weather-resistant screen

Slit 1 9

Slit 19 is formed only in lower hemisphere so as to extend up to center hole

(b) Front view

1 5 a
Upper hemispherical
weather-resistant screen

Cut out of
hemisphere

80 mm    260 mm    80 mm

Cut out of
hemisphere

1 5 b
Lower hemispherical
weather-resistant screen

Hole 1 8

(c) Plan view

80 mm

Cut out of
hemisphere

Hole
1 8

40 mm

260 mm

80 mm

Slit 1 9

Sound source identifying and
measuring system

S

10 Sound source identifying and measuring apparatus

20 Noise measuring apparatus

30 Radio altimeter signal
wave reception sensor

40 Transponder
response signal
wave receiver

51 Connector box

50 A/D converter

FIG.4

60 Sound source identifying and
analyzing apparatus
61 Calculation processing section
62 Recording section
63 Input section
64 Display section

EP 2 233 897 A1

# FIG.5

```
┌─────────────────────────────────────┐
│ S1: Determination step of time range │
└─────────────────────────────────────┘
                    ↓
┌─────────────────────────────────────┐
│   S2: Time-frequency analysis step   │
└─────────────────────────────────────┘
                    ↓
┌─────────────────────────────────────┐
│    S3: Sound source search step      │
└─────────────────────────────────────┘
                    ↓
┌─────────────────────────────────────┐
│  S4: Grouping step of sound sources  │
└─────────────────────────────────────┘
                    ↓
┌─────────────────────────────────────┐
│   S5: Determination step of sound    │
│             source group             │
└─────────────────────────────────────┘
                    ↓
┌─────────────────────────────────────┐
│  S6: Noise estimation step for each  │
│          sound source group          │
└─────────────────────────────────────┘
```

EP 2 233 897 A1

FIG.6

# FIG.7

Sound source from above
(Inside circle)

Sound source from blow
(Inside circle)

EP 2 233 897 A1

100

50

Front
⇕
Rear    0
(Degree)

−50

Direct sound
of aircraft
7 1

−100

−100  −50    0    50   100

Left⇔Right (Degree)

100

50

Front
⇕
Rear   0
(Degree)

−50

Ground-reflected
sound of aircraft
7 2

−100

−100  −50    0    50   100

Left⇔Right (Degree)

Sound source intensity

Weak ⇔ Strong

# FIG.8

Sound source from above
(Inside circle)

Moving sound of
automobile
7 3

Front
⇕
Rear
(Degree)

100
50
0
−50
−100

−100    −50    0    50    100

Direct sound of
aircraft  7 1

Left⇔Right (Degree)

Sound source from blow
(Inside circle)

Moving sound of
automobile
7 3

Front
⇕
Rear
(Degree)

100
50
0
−50
−100

−100    −50    0    50    100

Direct sound of
aircraft  7 1

Left⇔Right (Degree)

Sound source intensity

Weak ⇔ Strong

EP 2 233 897 A1

(a)

O : Sound source from above
× : Sound source from below

LASmax Time : 2005-10-28 14:04:02

Moving sound of 7 3 automobile

Front⇔Rear [ Degree ]

Ground-reflected sound of aircraft 7 2

Direct sound of aircraft 7 1

Left⇔Right [ Degree ]

(b)

$L_{ASmax}$ Time

Moving sound of automobile 73

Azimuth [degree]

Ground-reflected sound of aircraft 72

Direct sound of aircraft 71

Relative time [sec]

(c)

Elevation [degree]

Direct sound of aircraft 71

Moving sound of automobile 73

Ground-reflected sound of aircraft 72

Relative time [sec]

(d)

Ground-reflected sound of aircraft 72

Direct sound of aircraft 71

Sound source intensity [dB]

Moving sound of automobile 73

Relative time [sec]

FIG.9

EP 2 233 897 A1

**Table 1**

| Date | N | | | WECPNL | | | Difference | | Wind | | Rain |
|------|------|--------------|------|------|--------------|--------|----------------------------------------------|-------------------------------|--------------------------|--------------------------|-------------------------------|
| | Real sound | Conventional method | SBM method | Real sound | Conventional method | SBM method | (Conventional method)-(real sound) | (SBM method)-(real sound) | Average wind speed (m/s) | Maximum wind speed (m/s) | Precipitation amount (mm) |
| 3/7 | 58 | 74 | 55 | 56.8 | 69.1 | 56.6 | 5.3 | -0.2 | 4.3 | 7 | 0 |
| 3/8 | 69 | 81 | 67 | 56.9 | 57.4 | 56.7 | 0.5 | -0.2 | 3 | 6 | 0 |
| 3/9 | 29 | 36 | 26 | 53.1 | 54.3 | 52.9 | 1.2 | -0.2 | 4.6 | 9 | 0 |
| 3/10 | 43 | 64 | 45 | 55 | 57.4 | 55.1 | 2.4 | 0.1 | 4.3 | 7 | 0 |
| 3/11 | 68 | 73 | 67 | 58.5 | 59 | 58.5 | 0.4 | 0 | 4.6 | 9 | 23 |
| 3/12 | 70 | 74 | 68 | 56.4 | 57 | 56.1 | 0.6 | -0.2 | 3.5 | 7 | 0 |
| 3/13 | 55 | 74 | 56 | 55.7 | 60.4 | 55.7 | 4.8 | 0 | 4.3 | 7 | 0 |
| 3/14 | 61 | 79 | 61 | 55.1 | 55.7 | 55 | 0.6 | -0.1 | 5.5 | 9 | 0 |
| 3/15 | 56 | 77 | 58 | 55.2 | 56.5 | 55.4 | 1.3 | 0.2 | 4.4 | 8 | 0 |
| 3/16 | 85 | 99 | 83 | 59.5 | 64.9 | 59.5 | 5.4 | 0 | 4.1 | 7 | 0 |
| 3/17 | 67 | 80 | 67 | 58.6 | 58.9 | 58.7 | 0.4 | 0.1 | 3.9 | 7 | 0 |
| 3/18 | 43 | 53 | 44 | 55.2 | 56.3 | 55.4 | 1.1 | 0.2 | 5.9 | 11 | 0 |
| 3/19 | 58 | 72 | 60 | 56 | 57.2 | 56.1 | 1.2 | 0.1 | 5.5 | 11 | 0 |
| 3/20 | 42 | 58 | 44 | 54.7 | 55.7 | 54.7 | 1 | 0 | 4.6 | 9 | 0 |
| Average | 57 | 71 | 57 | 56.5 | 59.1 | 56.5 | 2.6 | 0 | 4.5 | 8.1 | 0 |

**INTERNATIONAL SEARCH REPORT**

| International application No. |
| --- |
| PCT/JP2008/050632 |

A. CLASSIFICATION OF SUBJECT MATTER
*G01H3/00*(2006.01)i

According to International Patent Classification (IPC) or to both national classification and IPC

B. FIELDS SEARCHED

Minimum documentation searched (classification system followed by classification symbols)
G01H3/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2006-38772 A  (Nittobo Acoustic Engineering Co., Ltd.),<br>09 February, 2006 (09.02.06),<br>Claims; Par. Nos. [0018], [0031] to [0035], [0041] to [0046], [0049], [0063]; all drawings<br>(Family: none) | 13<br>1-12 |
| Y | JP 2001-91351 A  (Kobayashi Institute of Physical Research),<br>06 April, 2001 (06.04.01),<br>Par. Nos. [0020], [0021]; all drawings<br>(Family: none) | 1-12 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 April, 2008 (02.04.08) | Date of mailing of the international search report<br>15 April, 2008 (15.04.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**EP 2 233 897 A1**

**INTERNATIONAL SEARCH REPORT**

| International application No. |
| --- |
| PCT/JP2008/050632 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2003-329510 A  (Nittobo Acoustic Engineering Co., Ltd.), 19 November, 2003 (19.11.03), Full text; all drawings (Family: none) | 1-12 |
| A | WO 2004/021031 A1  (Nittobo Acoustic Engineering Co., Ltd.), 11 March, 2004 (11.03.04), Full text; all drawings & US 2005/0246167 A1    & EP 1544635 A1 | 1-13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1750374 A
- JP 3699705 B
- JP 61013169 A

**Non-patent literature cited in the description**

- Koukuki souon kanshi sokutei manyuaru. Japan's Environmental Protection Agency
- Koukuuki souon no jidousokutei genba ni okeru kufuu. *Ingenuity on Site of Automatic Measurement of Aircraft Noise,* October 2005, vol. 29 (5